# EUROPEAN PATENT APPLICATION

(11) **EP 4 521 493 A2**
(43) Date of publication of application: **12.03.2025**
(21) Application number: 24186880.1
(22) Date of filing: 05.07.2024
(51) Int. Cl.: H01M 8/0208, H01M 8/0206, H01M 8/0228, H01M 8/0254, H01M 8/10, H01M 8/021

(54) **SEPARATOR OF ELECTROCHEMICAL CELL STACK**

(30) Priority: 04.09.2023 JP 2023142965
(71) Applicant: Kabushiki Kaisha Toshiba, Tokyo 105-0023 (JP); Toshiba Energy Systems & Solutions Corporation, Saiwai-ku Kawasaki-shi Kanagawa (JP)
(72) Inventor: NAKAZAWA, Keisuke, Kawasaki-shi, Kanagawa (JP); KANOME, Hiromasa, Kawasaki-shi, Kanagawa (JP); IMAI, Kiyoshi, Minato-ku, Tokyo (JP)
(74) Representative: Hoffmann Eitle

(57) **Abstract**

A separator 20 of an embodiment is a separator of an electrochemical cell stack 1 obtained by stacking a cell 10 including a polymer electrolyte membrane 14, an anode electrode 13, and a cathode electrode 15, and the separator 20. The separator 20 includes a substrate 80 formed of a metal material, and a corrosion-resistant film 90 formed on a surface 80a on the anode electrode side of the substrate 80 and a surface 80a on the cathode electrode side of the substrate 80, and formed of crystals of a corrosion-resistant material. An arithmetic average roughness Ra and a maximum height roughness Rz at the surface 80a of the substrate 80 are smaller than a particle size of the crystals.

## Description

### FIELD

Embodiments described herein relate generally to a separator of an electrochemical cell stack.

### BACKGROUND

An electrochemical cell stack is a stack obtained by sequentially stacking a cell being a minimum constitutional unit of a fuel cell or an electrolysis cell and a separator. The fuel cell generates electric power by making, for example, a fuel such as hydrogen and an oxidant such as oxygen to be electrochemically reacted with each other. Further, the electrolysis cell performs electrolysis being an inverse reaction of the reaction in the fuel cell. For example, in a water electrolysis cell, an oxidation reaction is caused at an anode to perform electrolysis on water, and a reduction reaction is caused at a cathode to generate a hydrogen gas.

As an electrochemical cell, there is an electrochemical cell that uses a polymer membrane for an electrolyte. For example, a polymer electrolyte fuel cell (PEFC) has a low operating temperature, and is used as a stationary fuel cell or a fuel cell for a movable body.

In a fuel cell for a movable body such as an automobile, it is required to reduce weight of a fuel cell stack for increasing a running distance by suppressing electricity consumption. A maj or part of the weight of the fuel cell stack is occupied by weight of a separator, and thus it is important to reduce the weight of the separator.

A separator in an electrochemical cell using a polymer membrane is generally formed of a carbon material or a metal material. When the separator is formed of the carbon material, since the carbon material is a fragile material, the separator is formed to have a thickness of about 1 mm. Accordingly, the carbon material is not suitable as a material for realizing the reduction in weight of the separator. On the other hand, when the separator is formed of the metal material, since the metal material has high strength, the separator is formed to have a thickness of about 0.1 mm. By forming the separator with the metal material, it is possible to reduce the weight of the separator.

Here, in an electrochemical cell using a polymer membrane, a polymer membrane containing acid such as sulfonic acid is used. Accordingly, a gas fluid flow path formed by a separator is exposed to an acid atmosphere with a hydrogen ion concentration index (pH) of 2 to 3. Therefore, it is important to take measures against corrosion of the separator.

The separator made of carbon has high resistance to acid, but it is not suitable for the reduction in weight, as described above. On the other hand, the separator made of metal is suitable for the reduction in weight, as described above, but it has low resistance to acid. As a material of the separator made of metal, stainless steel (SUS) or titanium with high corrosion resistance is sometimes used. Further, in the separator made of metal, a corrosion-resistant film formed of noble metal such as gold, conductive carbon, or the like, is provided to a surface of a substrate of the separator, for improving the corrosion resistance and reducing a contact resistance with an electrode.

However, in the conventional separator in which the corrosion-resistant film is provided to the surface of the substrate made of the metal material, defects such as pinholes and cracks are sometimes generated in the corrosion-resistant film. Even if the substrate of the separator is formed of the metal material with high corrosion resistance, the substrate is sometimes brought into contact with acid via the defects in the corrosion-resistant film and corroded. Accordingly, an electrochemical cell stack including the conventional separator also has a problem that an operating life thereof is short.

### BRIEF DESCRIPTION OF THE DRAWINGS

FIG. 1 is an exploded perspective view of an electrochemical cell stack including a separator of an embodiment.
FIG. 2 is a view illustrating a part of a cross section of the electrochemical cell stack including the separator of the embodiment.
FIG. 3 is a view schematically illustrating a part of a cross section of the separator of the embodiment.
FIG. 4 is a view schematically illustrating another example of the part of the cross section of the separator of the embodiment.
FIG. 5 is a schematic view for explaining a surface roughness of a substrate of the separator of the embodiment and a configuration of a corrosion-resistant film.
FIG. 6 is a schematic view for explaining a surface roughness of the substrate of the separator of the embodiment and a configuration of a corrosion-resistant film.
FIG. 7 is a schematic view for explaining a surface roughness of the substrate of the separator of the embodiment and a configuration of a corrosion-resistant film.
FIG. 8 is a schematic view for explaining a surface roughness of the substrate of the separator of the embodiment and a configuration of a corrosion-resistant film.
FIG. 9 is a schematic view for explaining another index of a surface roughness of the substrate of the separator of the embodiment.

### DETAILED DESCRIPTION

Hereinafter, embodiments of the present invention will be explained while referring to the drawings.

In one embodiment, a separator is a separator of an electrochemical cell stack obtained by stacking a cell including a polymer electrolyte membrane, an anode electrode, and a cathode electrode, and the separator. This separator includes a substrate formed of a metal material, and a corrosion-resistant film formed on a first surface on the anode electrode side of the substrate and a second surface on the cathode electrode side of the substrate, and formed of crystals of a corrosion-resistant material. Further, an arithmetic average roughness Ra and a maximum height roughness Rz at the first surface and the second surface are smaller than a particle size of the crystals.

### (Electrochemical cell stack 1)

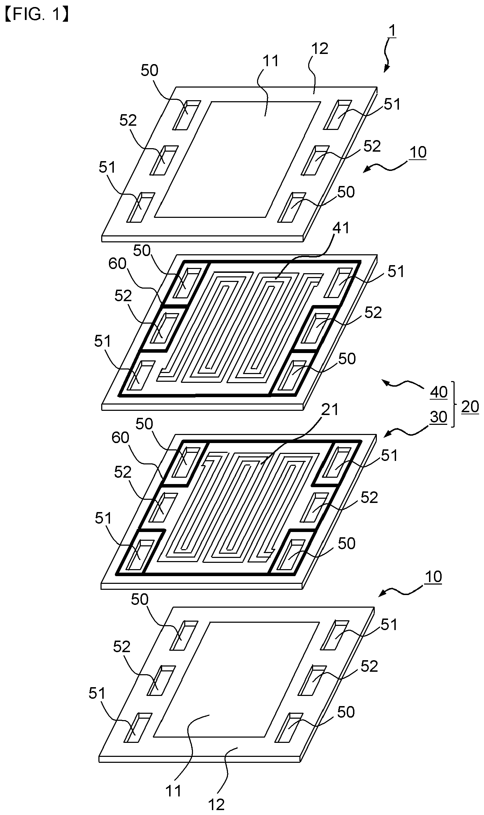

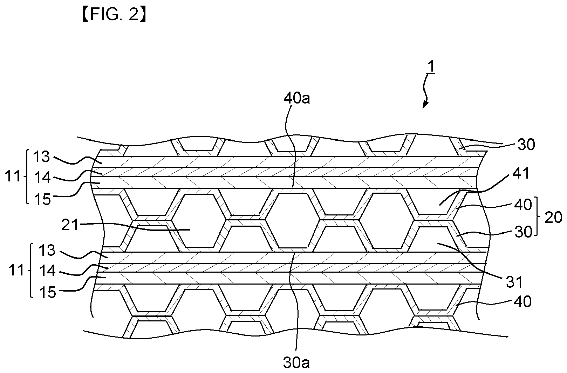

Here, a configuration of an electrochemical cell stack 1 including a separator 20 will be first explained. FIG. 1 is an exploded perspective view of an electrochemical cell stack 1 including a separator 20 of an embodiment. FIG. 2 is a view illustrating a part of a cross section of the electrochemical cell stack 1 including the separator 20 of the embodiment.

Here, the electrochemical cell stack 1 can be used as a polymer electrolyte fuel cell stack. Further, the electrochemical cell stack 1 can be used as a polymer electrolyte membrane electrolysis cell stack.

As illustrated in FIG. 1 and FIG. 2, the electrochemical cell stack 1 has a structure in which a cell 10, an anode separator 30, and a cathode separator 40 are set as one set, and the sets are stacked. The anode separator 30 and the cathode separator 40 are set as one pair, to thereby configure the separator 20. The separators 20 are stacked while sandwiching the cell 10.

The cell 10 includes a membrane electrode assembly (MEA) 11, and a cell outer frame 12. Note that the membrane electrode assembly will be indicated as MEA11, hereinbelow. The MEA11 includes an anode electrode 13, a polymer electrolyte membrane 14, and a cathode electrode 15, as illustrated in FIG. 2. The anode electrode 13, the polymer electrolyte membrane 14, and the cathode electrode 15 are formed in a flat plate shape.

The anode electrode 13 is provided on one side of a surface of the polymer electrolyte membrane 14 being an ion exchange membrane, and the cathode electrode 15 is provided on the other side of the surface of the polymer electrolyte membrane 14. The cell outer frame 12 is provided at an outer periphery of the MEA11, as illustrated in FIG. 1. The cell outer frame 12 is formed of a material that does not make gas permeate therethrough.

The anode separator 30 is provided on the anode electrode 13 side. At least a part of the anode separator 30 is brought into contact with the anode electrode 13. The cathode separator 40 is provided on the cathode electrode 15 side. At least a part of the cathode separator 40 is brought into contact with the cathode electrode 15.

As illustrated in FIG. 2, each of the anode separator 30 and the cathode separator 40 has, for example, a cross section of isosceles trapezoidal wave shape. A projecting portion to be an upper base is alternately formed on the anode electrode 13 side and the cathode electrode 15 side, with respect to a forming direction of the wave shape.

The separator 20 is formed by overlapping and joining the upper base projecting toward the cathode electrode 15 side of the anode separator 30 and the upper base projecting toward the anode electrode 13 side of the cathode separator 40.

Further, an anode fluid flow path 31 through which an anode fluid is made to flow is formed between the anode electrode 13 and the anode separator 30. A cathode fluid flow path 41 through which a cathode fluid is made to flow is formed between the cathode electrode 15 and the cathode separator 40. A refrigerant flow path 21 through which a refrigerant is made to flow is formed between the anode separator 30 and the cathode separator 40. As illustrated in FIG. 2, the refrigerant flow path 21 is formed of a space on the inner side of the projecting portion projecting toward the anode electrode 13 side of the anode separator 30 and a space on the inner side of the projecting portion projecting toward the cathode electrode 15 side of the cathode separator 40.

An end face 30a on the anode electrode 13 side of the upper base projecting toward the anode electrode 13 side of the anode separator 30, is brought into contact with the anode electrode 13. An end face 40a on the cathode electrode 15 side of the upper base projecting toward the cathode electrode 15 side of the cathode separator 40, is brought into contact with the cathode electrode 15.

On each of the cell outer frame 12, the anode separator 30, and the cathode separator 40, anode fluid manifolds 50, 50 through which the anode fluid is supplied and discharged, cathode fluid manifolds 51, 51 through which the cathode fluid is supplied and discharged, and refrigerant manifolds 52, 52 through which the refrigerant is supplied and discharged are formed. Note that one of the respective manifolds is a manifold through which the fluid is supplied, and the other is a manifold through which the fluid is discharged.

The respective flow paths of the anode fluid, the cathode fluid, and the refrigerant are sealed by a sealing member 60 for preventing leakage of the fluids to the outside. As illustrated in FIG. 1, the sealing member 60 of the cathode fluid is formed on a face on the cathode electrode 15 side of the cathode separator 40, for example. The sealing member 60 of the refrigerant is formed on a face on the cathode separator 40 side of the anode separator 30, for example. The sealing member 60 of the anode fluid is formed on a face on the anode electrode 13 side of the anode separator 30, for example.

Note that although one example in which the sealing member 60 is formed on the anode separator 30 and the cathode separator 40 is described here, the sealing member 60 may also be formed on the cell 10. Further, it is also possible to provide a gasket as the sealing member 60 between the respective faces to be sealed.

Further, one example in which each of the anode fluid flow path 31, the cathode fluid flow path 41, and the refrigerant flow path 21 is configured to have a serpentine structure with a plurality of bent portions is described here, as illustrated in FIG. 1, but not limited to this configuration. Each of the flow paths may also be configured to have a linear structure with no bent portion.

When the electrochemical cell stack 1 is used as a polymer electrolyte fuel cell stack, hydrogen is mainly used as the anode fluid, and oxygen and air are mainly used as the cathode fluid. Note that substances other than the above-described substances may also be used as the anode fluid and the cathode fluid.

For example, when hydrogen is used as the anode fluid and oxygen is used as the cathode fluid, the hydrogen supplied to one of the anode fluid manifolds 50 is introduced into the anode fluid flow path 31. Further, the oxygen supplied to one of the cathode fluid manifolds 51 is introduced into the cathode fluid flow path 41. The hydrogen and the oxygen are used as reactants of a chemical reaction accompanied by power generation in the cell 10.

The hydrogen that is not used as the reactant is discharged to the outside from the other anode fluid manifold 50. Further, the oxygen that is not used as the reactant is discharged, together with a product produced by the chemical reaction, to the outside from the other cathode fluid manifold 51.

When the electrochemical cell stack 1 is used as a polymer electrolyte membrane electrolysis cell stack, the polymer electrolyte membrane electrolysis cell stack is used for carbon dioxide electrolysis, water electrolysis, or the like. When the polymer electrolyte membrane electrolysis cell stack is used for the carbon dioxide electrolysis, water is used as the anode fluid, and carbon dioxide is used as the cathode fluid. When the polymer electrolyte membrane electrolysis cell stack is used for the water electrolysis, water is used as the anode fluid. Note that a predetermined voltage is externally applied between the anode electrode 13 and the cathode electrode 15.

When the polymer electrolyte membrane electrolysis cell stack is used for the carbon dioxide electrolysis, the water supplied to one of the anode fluid manifolds 50 is introduced into the anode fluid flow path 31. Further, the carbon dioxide supplied to one of the cathode fluid manifolds 51 is introduced into the cathode fluid flow path 41. The water and the carbon dioxide are used as reactants of a chemical reaction in the cell 10.

The water that is not used as the reactant is discharged, together with a product produced by the chemical reaction, to the outside from the other anode fluid manifold 50. Further, the carbon dioxide that is not used as the reactant is discharged, together with the product produced by the chemical reaction, to the outside from the other cathode fluid manifold 51.

When the polymer electrolyte membrane electrolysis cell stack is used for the water electrolysis, the water supplied to one of the anode fluid manifolds 50 is introduced into the anode fluid flow path 31. The water is used as a reactant of a chemical reaction in the cell 10.

The water that is not used as the reactant is discharged, together with the product produced by the chemical reaction, to the outside from the other anode fluid manifold 50. Further, on the cathode side, the product produced by the chemical reaction is discharged to the outside from the other cathode fluid manifold 51.

Here, in the case where the electrochemical cell stack 1 is used as the polymer electrolyte fuel cell stack or the polymer electrolyte membrane electrolysis cell stack, the refrigerant supplied to one of the refrigerant manifolds 52 is introduced into the refrigerant flow path 21. The refrigerant after cooling the MEA11 is discharged to the outside from the other refrigerant manifold 52. As the refrigerant, water is used, for example. Note that a substance other than water may also be used as the refrigerant.

### (Separator 20)

Next, a configuration of the separator 20 will be explained in detail.

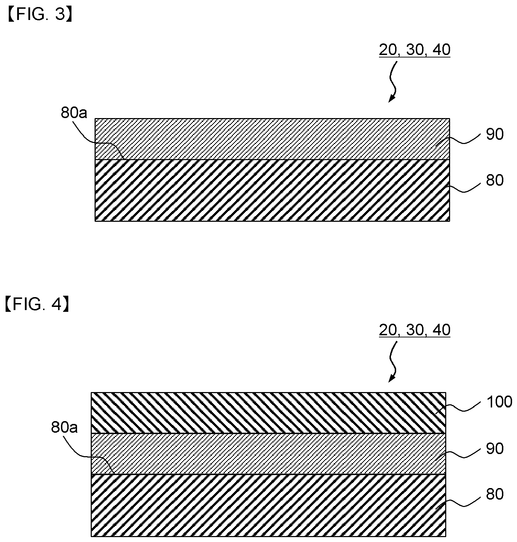

FIG. 3 is a view schematically illustrating a part of a cross section of the separator 20 of the embodiment. As illustrated in FIG. 3, each of the anode separator 30 and the cathode separator 40 configuring the separator 20 includes a substrate 80, and a corrosion-resistant film 90.

The substrate 80 is formed of a sheet metal of stainless steel (SUS), titanium, aluminum, an aluminum alloy, magnesium, a magnesium alloy, or the like. Concretely, the substrate 80 is formed of one material selected from these materials.

The substrate 80 is formed to have a thickness of about 0.1 mm, for example. Here, by forming the substrate 80 by using aluminum, the aluminum alloy, magnesium, or the magnesium alloy, it is possible to further reduce the weight of the substrate.

Note that the substrate 80 is formed in the above-described isosceles trapezoidal wave shape, for example, by performing press work, for example, on the above-described sheet metal. The press work may be performed before depositing the corrosion-resistant film 90, or it may also be performed after depositing the corrosion-resistant film 90.

The corrosion-resistant film 90 prevents the substrate 80 from being exposed to an acid atmosphere to be corroded. The corrosion-resistant film 90 is formed on at least one surface 80a of the substrate 80. In the anode separator 30, the corrosion-resistant film 90 is formed on at least a surface on the anode electrode 13 side of the substrate 80. The surface on the anode electrode 13 side of the substrate 80 in the anode separator 30 means the whole surface of the substrate 80 that faces the anode electrode 13. In the cathode separator 40, the corrosion-resistant film 90 is formed on at least a surface on the cathode electrode 15 side of the substrate 80. The surface on the cathode electrode 15 side of the substrate 80 in the cathode separator 40 means the whole surface of the substrate 80 that faces the cathode electrode 15.

The corrosion-resistant film 90 is formed of a material having not only corrosion resistance but also conductivity. The corrosion-resistant film 90 is formed of, for example, Ti, Ta, TiN, TaN, TiC, TaC, TiCN, TaCN, conductive carbon, or the like. Concretely, the corrosion-resistant film 90 is formed of a plurality of crystals of one material selected from these materials.

The corrosion-resistant film 90 is formed by using a deposition method such as a chemical vapor deposition method (CVD), an atomic layer deposition method (ALD), or a physical vapor deposition method (PVD) such as sputtering. By using these deposition methods, it is possible to form a film with small defects and good filling property. Further, by using these deposition methods, it is possible to form a film with good covering property. Furthermore, by using these deposition methods, it is possible to form a film with a uniform thickness with respect to even a surface of the separator 20 having the isosceles trapezoidal wave shape.

Here, in a case where the substrate 80 is formed of magnesium or a magnesium alloy, these materials are promptly oxidized in the atmosphere to form an oxide film. Accordingly, in order to suppress the formation of the oxide film on the surface of the substrate 80, it is preferable to promptly form the corrosion-resistant film 90 after a surface roughness adjustment of the surface 80a of the substrate 80, or to form the corrosion-resistant film 90 by using the substrate 80 managed in an oxygen-free atmosphere.

Note that it is also possible that an oxide film is formed on the surface of the substrate 80, to thereby make the oxide film function as a passive film for improving the corrosion resistance. When a film thickness of the passive film is large, an insulation property becomes high depending on materials, and a current becomes difficult to flow. For this reason, the oxide film (passive film) is formed to have a proper film thickness while taking the corrosion resistance and the insulation property into consideration. For example, when the substrate 80 is formed of aluminum, a thickness of an oxide film (aluminum oxide) is preferably 1 nm to 10 nm.

Here, FIG. 4 is a view schematically illustrating another example of the part of the cross section of the separator 20 of the embodiment. As illustrated in FIG. 4, at a portion where the anode separator 30 is brought into contact with the anode electrode 13, a conductive film 100 may also be formed on a surface on the anode electrode 13 side of the corrosion-resistant film 90. Further, at a portion where the cathode separator 40 is brought into contact with the cathode electrode 15, the conductive film 100 may also be formed on a surface on the cathode electrode 15 side of the corrosion-resistant film 90.

The conductive film 100 is only required to be formed on at least the surface of the corrosion-resistant film 90 that is brought into contact with the anode electrode 13, and at least the surface of the corrosion-resistant film 90 that is brought into contact with the cathode electrode 15. Note that the portion where the anode separator 30 is brought into contact with the anode electrode 13 is the end face 30a on the anode electrode 13 side of the upper base of the anode separator 30, and the portion where the cathode separator 40 is brought into contact with the cathode electrode 15 is the end face 40a on the cathode electrode 15 side of the upper base of the cathode separator 40 (refer to FIG. 2).

By providing the conductive film 100, it is possible to reduce a contact resistance at the contact portion between the anode electrode 13 or the cathode electrode 15 and the separator 20. Note that it is preferable to provide the conductive film 100 when the corrosion-resistant film 90 is formed of Ti, Ta, TiN, TaN, TiC, TaC, TiCN, or TaCN.

The conductive film 100 is formed of a material excellent in conductivity and containing carbon as a main component. The conductive film 100 is formed of, for example, conductive carbon or the like. Note that the conductive film 100 is formed by using, for example, the chemical vapor deposition method (CVD), or the physical vapor deposition method (PVD) such as sputtering.

Here, a contact resistivity between each separator and each electrode is preferably 10 mΩ·cm² or less according to guidelines of U.S. Department of Energy. Note that the contact resistivity indicated here is a value obtained by performing measurement with a four-terminal method under a load of 1 MPa by overlapping each separator and each electrode.

Next, a surface roughness at the surface 80a of the substrate 80 on which the corrosion-resistant film 90 is formed, and the corrosion-resistant film 90 will be explained.

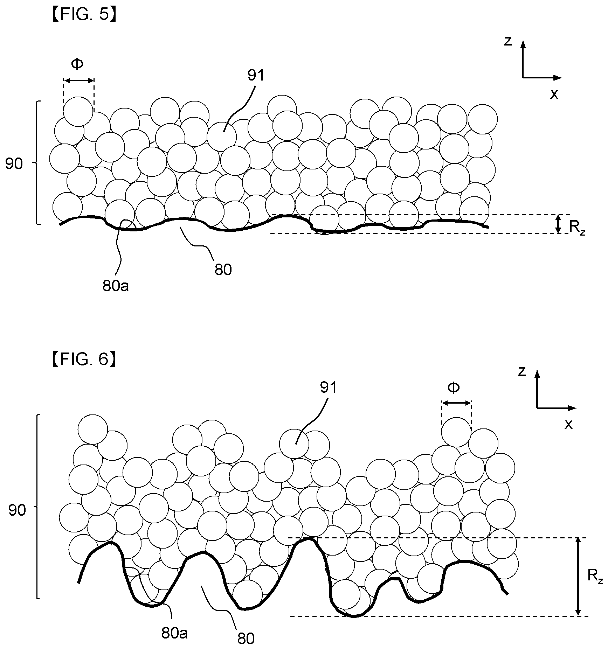

FIG. 5 to FIG. 8 are schematic views for explaining a surface roughness of the substrate 80 of the separator 20 of the embodiment and a configuration of the corrosion-resistant film 90.

The surface roughness at the surface 80a of the substrate 80 is adjusted by surface polishing or the like. The adjustment of surface roughness is performed by, for example, abrasive paper, mechanical polishing, or the like. The surface roughness is expressed by an arithmetic average roughness (Ra) (JIS B 0601: 2013), and a maximum height roughness (Rz) (JIS B 0601: 2013). Note that the maximum height roughness (Rz) generally has a value larger than that of the arithmetic average roughness (Ra).

The arithmetic average roughness (Ra) at the surface 80a of the substrate 80 is preferably 0.01 µm or less. The arithmetic average roughness (Ra) at the surface 80a is more preferably 0.005 µm or less. The arithmetic average roughness (Ra) at the surface 80a is still more preferably 0.002 µm or less.

Further, the maximum height roughness (Rz) at the surface 80a of the substrate 80 is preferably 0.1 µm or less. The maximum height roughness (Rz) at the surface 80a is more preferably 0.05 µm or less. The maximum height roughness (Rz) at the surface 80a is still more preferably 0.02 µm or less.

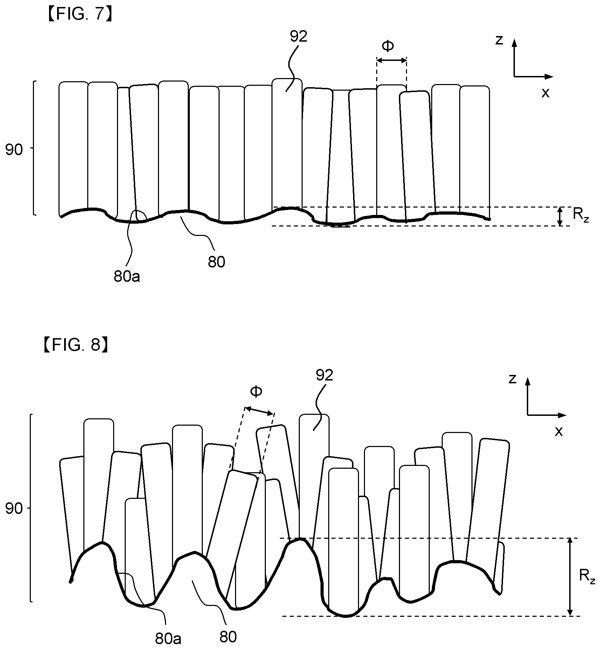

Here, the corrosion-resistant film 90 is formed of a plurality of crystals made of a corrosion-resistant material, as illustrated in FIG. 5 to FIG. 8. FIG. 5 and FIG. 6 illustrate a configuration in which the corrosion-resistant film 90 is formed of spherical crystals 91. FIG. 7 and FIG. 8 illustrate a configuration in which the corrosion-resistant film 90 is formed of columnar crystals 92. FIG. 5 and FIG. 7 illustrate a configuration in which the surface roughness at the surface 80a is small. Further, FIG. 5 and FIG. 7 illustrate a case in which the maximum height roughness (Rz) is smaller than an average particle size of the crystals. FIG. 6 and FIG. 8 illustrate a configuration in which the surface roughness at the surface 80a is large. Further, FIG. 6 and FIG. 8 illustrate a case in which the maximum height roughness (Rz) is larger than an average particle size of the crystals.

Note that here, an average particle size of the spherical crystals 91 means an arithmetic average value of particle sizes of the respective spherical crystals 91. An average particle size of the columnar crystals 92 means an arithmetic average value of diameters in a cross section of the respective columnar crystals 92 perpendicular to a growth direction of the columnar crystals 92. A particle size Φ of each crystal is measured by using a scanning electron microscope (SEM).

As illustrated in FIG. 5 and FIG. 7, when the surface roughness is small, a concavity and a convexity at a surface of the corrosion-resistant film 90 are also small. On the other hand, as illustrated in FIG. 6 and FIG. 8, when the surface roughness is large, the concavity and the convexity at the surface of the corrosion-resistant film 90 are also large. Specifically, the shape of the surface of the corrosion-resistant film 90 is influenced by the shape of the surface 80a of the substrate 80. Further, defects such as cavities and cracks in the corrosion-resistant film 90 are likely to be generated when the concavity and the convexity at the surface of the corrosion-resistant film 90 are large, when compared to the case where the concavity and the convexity at the surface of the corrosion-resistant film 90 are small.

The crystal forming the corrosion-resistant film 90 grows upward from the surface 80a of the substrate 80. Concretely, the crystal forming the corrosion-resistant film 90 grows in a direction substantially perpendicular to the surface 80a. Accordingly, at the surface 80a, a crystal that grows from an inclined surface that inclines with respect to a horizontal direction interferes with a crystal that grows from the surface 80a that is not inclined, to thereby inhibit the growth of crystals. As a result of this, in the corrosion-resistant film 90 formed of crystals grown under such a situation, defects such as cavities and cracks are likely to be generated. The surface 80a of the substrate 80 including the corrosion-resistant film 90 having the defects is exposed to an acid substance, namely, an acid atmosphere to be corroded.

Further, the arithmetic average roughness (Ra) and the maximum height roughness (Rz) at the surface 80a of the substrate 80 are preferably smaller than the average particle size of the crystals that form the corrosion-resistant film 90. In other words, the average particle size of the crystals that form the corrosion-resistant film 90 is preferably larger than the arithmetic average roughness (Ra) and the maximum height roughness (Rz) at the surface 80a. When the particle size of the crystal is larger than the surface roughness (Ra, Rz) at the surface 80a, the crystal is likely to grow in the perpendicular direction from the surface 80a of the substrate 80. This suppresses the generation of defects such as cavities and cracks in the corrosion-resistant film 90.

Here, as a film thickness of the corrosion-resistant film 90 increases, the corrosion resistance increases. Accordingly, it is preferable that the film thickness of the corrosion-resistant film 90 is larger than at least the maximum height roughness (Rz) and the arithmetic average roughness (Ra). The film thickness of the corrosion-resistant film 90 is a distance in a z-axis direction from the surface 80a of the substrate 80 to a surface of the corrosion-resistant film 90, in FIG. 5 to FIG. 8.

The film thickness of the corrosion-resistant film 90 is preferably a film thickness by which the concavity and the convexity of the surface 80a of the substrate 80 are completely covered by the corrosion-resistant film 90. The film thickness of the corrosion-resistant film 90 is preferably set to, for example, two times or more the maximum height roughness (Rz). For example, when the corrosion-resistant film 90 as illustrated in FIG. 5 is formed of the spherical crystals 91, it is possible to obtain the corrosion-resistant film 90 formed of the spherical crystals 91 stacked in a plurality of stages in the growth direction.

Further, in order to reduce the defects in the corrosion-resistant film 90, a range of variation of the film thickness of the corrosion-resistant film 90 also becomes an important parameter. Accordingly, the range of variation of the film thickness of the corrosion-resistant film 90 is preferably within a range of ±20% with respect to an average value of the film thickness of the corrosion-resistant film 90, and it is more preferably within a range of ±10% with respect to the average value of the film thickness of the corrosion-resistant film 90. In other words, the film thickness of the corrosion-resistant film 90 formed on the surface 80a of the substrate 80 is preferably 120% or less and 80% or more of the average value of the film thickness of the corrosion-resistant film 90, and it is more preferably 110% or less and 90% or more of the average value of the film thickness of the corrosion-resistant film 90. Note that the average value of the film thickness here is an arithmetic average value of the film thickness at a plurality of locations in a predetermined range in which the corrosion-resistant film 90 is formed.

Next, another index of the surface roughness at the surface 80a of the substrate 80 will be explained.

The above-described surface roughness has been explained while setting the maximum level difference of the concavity and the convexity of the surface within the predetermined range, to the maximum height roughness (Rz). Here, an index of the surface roughness that focuses attention on each of the concavity and the convexity of the surface 80a of the substrate 80 will be explained.

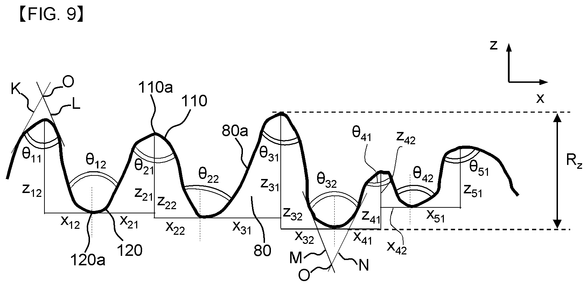

FIG. 9 is a schematic view for explaining another index of the surface roughness of the substrate 80 of the separator 20 of the embodiment.

As illustrated in FIG. 9, the surface 80a of the substrate 80 has a surface roughness shape with a concavity/convexity structure in which a crest portion 110 and a valley portion 120 are continuously formed repeatedly. Note that the crest portion 110 is a portion projecting upward in FIG. 9, and the valley portion 120 is a portion projecting downward in FIG. 9. Specifically, the crest portion 110 forms a convexity portion, and the valley portion 120 forms a concavity portion.

Here, a distance in a vertical direction between a top portion 110a of the crest portion 110 and a bottom portion 120a of the valley portion 120 adjacent to this crest portion 110, is indicated by zi. Further, a distance in a horizontal direction between the top portion 110a of the crest portion 110 and the bottom portion 120a of the valley portion 120 adjacent to this crest portion 110, is indicated by xi. Note that in FIG. 9, the top portion 110a is the most upwardly projecting portion in each crest portion 110. The bottom portion 120a is the most downwardly recessed portion in each valley portion 120.

Regarding a subscript i of x and z illustrated in FIG. 9, the tens digit is a number for expressing each crest portion 110 and each valley portion 120. Further, the units digit of the subscript i is a number for expressing, in each crest portion 110 and each valley portion 120, one distance in the horizontal direction and one distance in the vertical direction, and the other distance in the horizontal direction and the other distance in the vertical direction. For example, in FIG. 9, the number of the tens digit of the subscript i of the third crest portion 110 is "3". In the third crest portion 110, the units digit of the subscript i expressing one distance in the horizontal direction and one distance in the vertical direction is "1", and the units digit of the subscript i expressing the other distance in the horizontal direction and the other distance in the vertical direction is "2".

Here, as another index of the surface roughness, a ratio between the distance xi in the horizontal direction and the distance zi in the vertical direction (zi/xi) at the top portion 110a of the crest portion 110 and the bottom portion 120a of the valley portion 120 adjacent to this crest portion 110, is defined as an aspect ratio ARi. Note that the distance xi in the horizontal direction and the distance zi in the vertical direction are measured by using an electron microscope or the like.

The larger the value of the aspect ratio ARi, the steeper the inclination at the surface 80a, and the smaller the value of the aspect ratio ARi, the gentler the inclination at the surface 80a.

Further, in FIG. 9, an angle of a bent portion in the crest portion 110 and the valley portion 120 is indicated by θⱼ. The angle θⱼ of the bent portion in the crest portion 110 is a spread angle in the lower direction from the top portion 110a of the crest portion 110. Further, the angle θⱼ of the bent portion in the valley portion 120 is a spread angle in the upper direction from the bottom portion 120a of the valley portion 120.

Note that regarding a subscript j of θ illustrated in FIG. 9, the tens digit is a number for expressing each crest portion 110 and each valley portion 120. Further, the units digit of the subscript j is a number for expressing the crest portion 110 or the valley portion 120, in which "1" is used for expressing the crest portion 110, and "2" is used for expressing the valley portion 120. For example, in FIG. 9, the number of the tens digit of the subscript j of the third crest portion 110 is "3". Further, the units digit of the subscript j of the third crest portion 110 is "1".

Here, the angle θⱼ in each crest portion 110 is defined as follows. At right and left surfaces 80a at arbitrarily-decided positions in a minus direction of the z-axis (a vertically lower direction in FIG. 9) from the top portion 110a of the crest portion 110, tangents K, L are respectively drawn. The angle θⱼ in each crest portion 110 is an angle on the top portion 110a side between the tangent K and the tangent L with an intersection point O of these tangents K, L set as a center.

In like manner, the angle θⱼ in each valley portion 120 is defined as follows. At right and left surfaces 80a at arbitrarily-decided positions in a plus direction of the z-axis (a vertically upper direction in FIG. 9) from the bottom portion 120a of the valley portion 120, tangents M, N are respectively drawn. The angle θⱼ in each valley portion 120 is an angle on the bottom portion 120a side between the tangent M and the tangent N with an intersection point O of these tangents M, N set as a center.

The smaller the angle θⱼ, the steeper the inclination at the surface 80a, and the larger the angle θⱼ, the gentler the inclination at the surface 80a.

Here, in order to suppress the generation of defects such as cavities and cracks in the corrosion-resistant film 90 formed on the surface 80a of the substrate 80, it is preferable that the crystals are densely formed on the surface 80a. For example, when the inclination at the surface 80a is steep and the valley portion 120 is deep, it becomes difficult to fill the crystals in the valley portion 120. In order to properly fill the crystals in the valley portion 120, a configuration with a small aspect ratio ARi is preferable. Further, in order to properly fill the crystals in the valley portion 120, a configuration with a large angle θⱼ is preferable.

Accordingly, the aspect ratio ARi is preferably 1.0 or less, and more preferably 0.5 or less. Further, the angle θⱼ is preferably 120 degrees or more, and more preferably 150 degrees or more.

Here, the setting of the surface roughness (Ra, Rz) at the surface 80a of the substrate 80 and the configuration of the corrosion-resistant film 90 described above, are applied to the surface of the substrate 80 that is exposed to the acid atmosphere, in the anode separator 30 and the cathode separator 40. Concretely, the setting of the surface roughness (Ra, Rz) and the configuration of the corrosion-resistant film 90 described above are applied to at least the surface on the anode electrode 13 side of the substrate 80 in the anode separator 30, and are applied to at least the surface on the cathode electrode 15 side of the substrate 80 in the cathode separator 40.

Here, it is sufficient that a surface of the substrate 80 on the side of not being exposed to the acid atmosphere, namely, a surface of the substrate 80 on the side of forming the refrigerant flow path 21, is not corroded under an environment of being exposed to the refrigerant. Specifically, to the setting of the surface roughness (Ra, Rz) at the surface of the substrate 80 on the side of not being exposed to the acid atmosphere and the configuration of the corrosion-resistant film 90, the setting of the surface roughness (Ra, Rz) at the surface 80a of the substrate 80 and the configuration of the corrosion-resistant film 90 described above may not be applied. For example, a conventional general specification may be applied to the setting of the surface roughness (Ra, Rz) of the substrate 80 on the side of not being exposed to the acid atmosphere and the configuration of the corrosion-resistant film 90.

### (Corrosion resistance evaluation)

Here, an evaluation of sulfuric acid resistance was performed as a corrosion resistance evaluation. Table 1 shows specifications of samples used for performing the evaluation and evaluation results. Note that a sample 1 and a sample 2 in Table 1 are examples in the present embodiment, and a sample 3 and a sample 4 are comparative examples.

**[Table 1]**

| | Surface roughness, µm | | | | |
|---|---|---|---|---|---|
| | Ra | Rz | Material of corrosion-resistant film | Average particle size, µm | Sulfuric acid resistance |
| Sample 1 | 0.002 | 0.02 | Ti | 0.1 | 10 seconds or more |
| Sample 2 | 0.002 | 0.02 | Ta | 0.1 | 10 seconds or more |
| Sample 3 | 0.3 | 2 | Ti | 0.1 | 5 seconds or less |
| Sample 4 | 0.3 | 2 | Ta | 0.1 | 5 seconds or less |

As a substrate of forming a separator, a thin sheet made of a magnesium alloy and having a thickness of 0.1 mm was used. One surface of the substrate was subjected to surface polishing by mechanical polishing using slurry, thereby making one surface in each sample have an arithmetic average roughness (Ra) and a maximum height roughness (Rz) shown in Table 1. The arithmetic average roughness (Ra) and the maximum height roughness (Rz) were measured by a laser interference surface roughness tester.

Subsequently, on the surface-polished surface of the substrate, a corrosion-resistant film made of titanium (Ti) or tantalum (Ta) and having a film thickness of 300 nm was formed by sputtering. Note that the substrate before forming the corrosion-resistant film was managed under an oxygen-free atmosphere.

A scanning electron microscope was used to observe the corrosion-resistant film, and particle sizes of respective crystals that form the corrosion-resistant film were measured. Further, an arithmetic average of the measured particle sizes of the respective crystals was calculated as an average particle size. The calculated average particle sizes are shown in Table 1.

In the evaluation of sulfuric acid resistance, a sulfuric acid aqueous solution with a concentration of 5% was dropped on the corrosion-resistant film with a dropper, and a time until an occurrence of foaming was determined. Here, the foaming occurs when magnesium of the substrate and sulfuric acid react with each other, so that it means that the shorter the time until the occurrence of forming, the poorer the sulfuric acid resistance.

As shown in Table 1, the sample 1 and the sample 2 having a small surface roughness (Ra, Rz) have higher sulfuric acid resistance than the sample 3 and the sample 4 having a large surface roughness. Further, the sample 1 and the sample 2 whose surface roughness (Ra, Rz) is smaller than the average particle size of crystals, have higher sulfuric acid resistance than the sample 3 and the sample 4 whose surface roughness (Ra, Rz) is larger than the average particle size of crystals.

From these results, in the sample 3 and the sample 4 having the large surface roughness, it can be considered that at the surface of the substrate, crystals that grow from an inclined surface that inclines with respect to the horizontal direction interfere with crystals that grow from a not-inclined surface, to thereby inhibit the growth of crystals. As a result of this, in the sample 3 and the sample 4, it can be considered that defects such as cavities and cracks are generated in the corrosion-resistant film, and the sulfuric acid aqueous solution permeates from the defects to reach the substrate. Accordingly, the sample 3 and the sample 4 have results that they are poor in sulfuric acid resistance.

On the other hand, in the sample 1 and the sample 2 having the small surface roughness, it can be considered that the mutual interference of growing crystals is suppressed. As a result of this, in the sample 1 and the sample 2, it can be considered that the generation of defects such as cavities and cracks in the corrosion-resistant film is suppressed, and the contact of the sulfuric acid aqueous solution with respect to the substrate is suppressed. For this reason, in the sample 1 and the sample 2, the excellent sulfuric acid resistance is obtained.

As described above, according to the separator 20 of the present embodiment, by setting the arithmetic average roughness (Ra) and the maximum height roughness (Rz) at the surface 80a of the substrate 80 of the separator 20 that faces the anode electrode 13, and the surface 80a of the substrate 80 of the separator 20 that faces the cathode electrode 15 to fall within the above-described range, it is possible to form the corrosion-resistant film whose defects are suppressed, on the surface 80a. This suppresses the exposure of the surface 80a of the substrate 80 to acid. Accordingly, it is possible to obtain the separator 20 having excellent corrosion resistance, and it is possible to provide the electrochemical cell stack 1 with a long operating life.

Further, by providing the configuration of the separator 20 of the present embodiment, it is possible to configure the separator 20 itself with a metal material of thin sheet. Accordingly, it is possible to reduce the weight of the electrochemical cell stack 1.

Further, as described above, also by setting, as another index of the surface roughness, the aspect ratio ARi and the angle θⱼ of the bent portion at the crest portion 110 and the valley portion 120 to fall within the above-described predetermined range, it is possible to form the corrosion-resistant film whose defects are suppressed, on the surface 80a of the substrate 80 of the separator 20. This suppresses the exposure of the surface 80a of the substrate 80 to acid. Accordingly, it is possible to obtain the separator 20 having excellent corrosion resistance, and it is possible to provide the electrochemical cell stack 1 with a long operating life.

According to the embodiments described above, it is possible to provide the separator of the electrochemical cell stack capable of realizing the reduction in weight and having excellent corrosion resistance.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms of modifications as would fall within the scope and spirit of the inventions.

## Claims

1. A separator of an electrochemical cell stack obtained by stacking a cell including a polymer electrolyte membrane, an anode electrode, and a cathode electrode, and the separator, the separator of the electrochemical cell stack, comprising:
a substrate formed of a metal material; and
a corrosion-resistant film formed on a first surface on the anode electrode side of the substrate and a second surface on the cathode electrode side of the substrate, the corrosion-resistant film being formed of crystals of a corrosion-resistant material, wherein
an arithmetic average roughness Ra and a maximum height roughness Rz at the first surface and the second surface are smaller than a particle size of the crystals.

2. The separator of the electrochemical cell stack according to claim 1, wherein the crystals are spherical crystals, and the particle size is an average particle size of the crystals.

3. The separator of the electrochemical cell stack according to claim 1, wherein the crystals are columnar crystals, and the particle size is an average value of diameters in a cross section perpendicular to a growth direction of the crystals.

4. The separator of the electrochemical cell stack according to claim 1, wherein the arithmetic average roughness Ra at the first surface and the second surface is 0.01 µm or less.

5. The separator of the electrochemical cell stack according to claim 1, wherein the maximum height roughness Rz at the first surface and the second surface is 0.1 µm or less.

6. The separator of the electrochemical cell stack according to claim 1, wherein:
the first surface and the second surface have a surface roughness shape in which a crest portion projecting upward and a valley portion projecting downward are continuously formed repeatedly; and
an aspect ratio ARi being a ratio between a distance xi in a horizontal direction and a distance zi in a vertical direction (zi/xi) at a top portion of the crest portion and a bottom portion of the valley portion adjacent to the crest portion is 1.0 or less.

7. The separator of the electrochemical cell stack according to claim 1, wherein:
the first surface and the second surface have a surface roughness shape in which a crest portion projecting upward and a valley portion projecting downward are continuously formed repeatedly; and
an angle of a spread angle in a lower direction from a top portion of the crest portion and an angle of a spread angle in an upper direction from a bottom portion of the valley portion are 120 degrees or more.

8. The separator of the electrochemical cell stack according to claim 1, wherein a range of variation of a film thickness of the corrosion-resistant film is within a range of ±20% with respect to an average value of the film thickness of the corrosion-resistant film.

9. The separator of the electrochemical cell stack according to claim 1, wherein the corrosion-resistant film is formed of a material having conductivity.

10. The separator of the electrochemical cell stack according to claim 1, wherein
the corrosion-resistant film is formed of one material selected from Ti, Ta, TiN, TaN, TiC, TaC, TiCN, TaCN, and conductive carbon.

11. The separator of the electrochemical cell stack according to claim 1,
wherein
a passive film is formed between the substrate and the corrosion-resistant film.

12. The separator of the electrochemical cell stack according to claim 1,
wherein
in the corrosion-resistant film formed on the first surface and the second surface, a conductive film containing carbon as a main component is formed on at least a surface of the corrosion-resistant film that is brought into contact with the anode electrode, and at least a surface of the corrosion-resistant film that is brought into contact with the cathode electrode.

13. The separator of the electrochemical cell stack according to claim 1, wherein:
the separator is configured by stacking an anode separator provided on the anode electrode side and a cathode separator provided on the cathode electrode side; and
a refrigerant flow path through which a refrigerant is made to flow is formed between the anode separator and the cathode separator.

14. The separator of the electrochemical cell stack according to claim 1, wherein
the substrate is formed of one material selected from stainless steel, titanium, aluminum, an aluminum alloy, magnesium, and a magnesium alloy.
